# EUROPÄISCHE PATENTSCHRIFT

(11) **EP 2 097 964 B1**
(45) Veröffentlichungstag und Bekanntmachung des Hinweises auf die Patenterteilung: **27.02.2013**
(21) Anmeldenummer: 07856464.8
(22) Anmeldetag: 07.12.2007
(51) Int. Cl.: H02K 1/30, H02K 1/27, H02K 21/12, H02K 7/08, H02K 11/00

(54) **DREHFELDMASCHINE MIT GLOCKENLÄUFER**
POLYPHASE MACHINE COMPRISING A BELL-SHAPED ROTOR
GENERATEUR A INDUCTION COMPORTANT UN INDUIT EN CLOCHE

(30) Priorität: 07.12.2006 DE 102006058064
(43) Veröffentlichungstag der Anmeldung: 09.09.2009
(73) Patentinhaber: IPGATE AG, 8808 Pfäffikon SZ (CH)
(72) Erfinder: LEIBER, Thomas, 81675 München (DE); UNTERFRAUNER, Valentin, 80935 München (DE)
(74) Vertreter: Lenzing Gerber Stute
(86) Internationale Anmeldenummer: PCT/EP2007/010661
(87) Internationale Veröffentlichungsnummer: WO 2008/068033

(56) Entgegenhaltungen:
- EP-A- 1 134 383
- WO-A-2006/000260
- DE-A1- 19 753 916
- FR-A- 2 536 222
- US-A1- 2001 013 732

## Beschreibung

Die vorliegende Erfindung betrifft eine Elektrische Drehfeldmaschine nach dem Oberbegriff des Anspruch 1.

### Stand der Technik:

Gattungsgemäße Drehfeldmaschinen werden auch als Glockenläufer bezeichnet. Sie weisen in der Regel einen feststehenden Innen- und Außenstator und einen drehbar gelagerten Rotor auf, wobei letzterer durch eine Glocke gebildet ist. In der Glocke können Permanentmagnetelemente für eine magnetische Vorspannung angeordnet sein.

Eine derartige Drehfeldmaschine ist aus W02006/000260 bekannt. Die dort beschriebene Drehfeldmaschine ist jedoch als Prinzipaufbau dargestellt. Auf weitere ähnliche Drehfeldmaschinen und dem Stand der Technik ist im Recherchenbericht der WO2006/000260 verwiesen.

Aus EP 1 134 383 A2 ist ferner ein Außenläufer bekannt, bei dem der Rotor ein Mitnehmerelement aufweit, an dem eine zylindrische Wandung in Form einer Hülse befestigt ist, an deren Innenwandung Permanentmagnete angeordnet sind. Die Wandstärke der zylindrischen Wandung ist wie der Figur 4 zu entnehmen, lediglich geringfügig kleiner als die Wandstärke des Mitnehmerelements.

### Aufgabe der Erfindung:

Ziel der Erfindung ist es, einen konstruktiven Aufbau abzuleiten, mit dem der in der W02006/000260 darstellte prinzipielle Motoraufbau derart weiterentwickelt ist, dass der Motor zu einem kostengünstig hergestellt werden kann, eine gute Wärmeabfuhr ermöglicht, sowie eine Rotorkonstruktion darstellt, mit der eine hohe mechanische Steifigkeit erzielt werden kann sowie ein guter Rundlauf erzielt werden kann. Dabei soll der Motors einen hohem Wirkungsgrad bei gleichzeitig niedrigem Massenträgheitsmoment sicherstellen. Außerdem sollen aufgezeigt werden, mit welchen Maßnahmen in einer derartigen Motorkonstruktion das Rastmoment und somit die Rundlaufeigenschaften optimiert werden können.

Diese Aufgabe wird erfinderisch durch einen elektrischen Antrieb mit den Merkmalen des Anspruch 1 gelöst. Weitere vorteilhafte Ausgestaltungen dieses Antriebs ergeben sich durch die Merkmale der Unteransprüche.

Nachfolgend werden verschiedene Ausgestaltungen des erfindungsgemäßen Antriebs anhand von Zeichnungen näher erläutert.

Es zeigen:
Fig. 1: Erfindungsgemäßer elektrischer Antrieb im Längsschnitt
Fig. 1a: Alternative Gehäusekonstruktion
Fig. 1b: Variante der Rotorkonstruktion
Fig. 2: Querschnittdarstellung durch Stator mit Erregerspulen

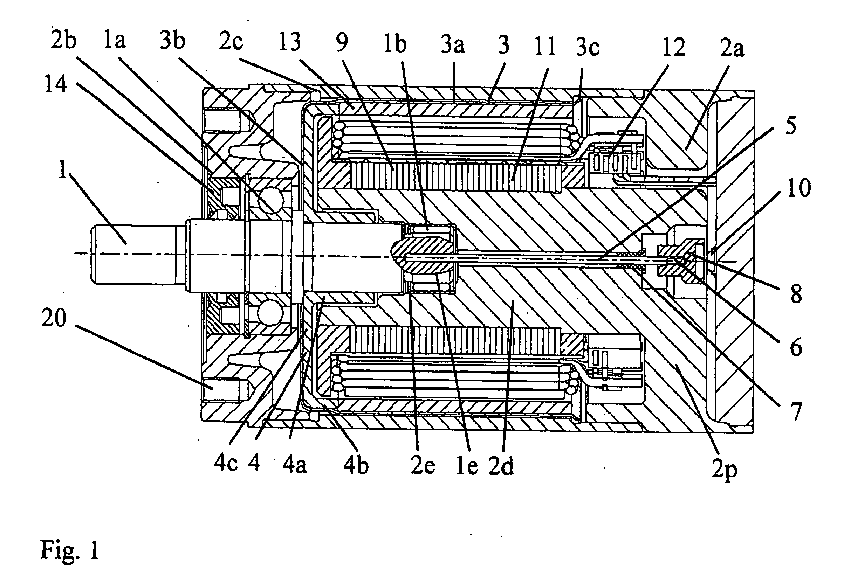

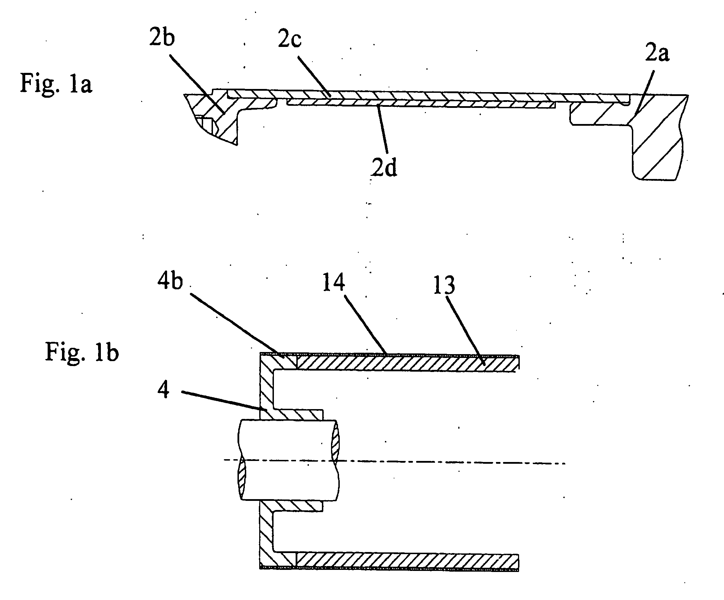

Fig. 1 zeigt einen Längsschnitt durch den erfindungsgemäßen Antriebs. Zur Übertragung des im Antrieb erzeugten Drehmoments ist eine Antriebswelle 1 vorgesehen, die mit zwei Wälzlagern 1a und 1b drehbar im Gehäuse des Antriebs gelagert ist.

Das Gehäuse besteht aus drei Teilen. Der erste stirnseitige Gehäuseteil 2a trägt den Stator 11 und die Erregerspulen 9 sowie das Lager 1b und ist vorzugsweise als Aluminiumgussteil ausgeführt. Das rechte stirnseitige Gehäuseteil 2b trägt das Wälzlager 1a der Antriebswelle 1 und dient zum Anflanschen. Dazu sind im Gehäuseteil 2b geeignete Bohrungen 20 vorgesehen. Ein dritter mittlerer Gehäuseteil 2c verbindet die beiden Gehäuseteile 2a und 2b miteinander und bildet gleichzeitig den Rückschluss des Magnetkreises. Das mittlere Gehäuseteil 2c ist daher aus ferromagnetischen Stahl ausgeführt.

Zur Reduzierung der Wirbelstromverluste ist es auch denkbar, dass im Gehäuseteil 2c, wie in Fig. 1a dargestellt, ein Außenstator 2d aus Elektroblech eingesetzt ist. Dies hat den Vorteil, dass das mittlere Gehäuseteil 2c aus einen anderen Werkstoff ausgeführt werden kann, bzw. als einfaches Drehteil hergestellt ist.

Der Gehäuseaufbau ermöglicht eine einfache Montage, sowie ein sehr kompaktes Motordesign. Durch die Entkoppelung des magnetischen Rückschlusses durch den doppelten Luftspalt kann ein sehr geringes Trägheitsmoment errecht werden und gleichzeitig im kompakten Bauraum ein sehr hohes Moment errecht werden. Daher ist es besonders vorteilhaft, den Gehäuseteil 2c, der den magnetischen Rückschluss bildet, sehr dünnwandig auszuführen (ca. halbe Dicke des Nutbreite). Durch diese Anordnung ist es möglich, den Rotor mit einem möglichst großen Durchmesser auszugestalten, wodurch ein großer Hebelarm zur Erzeugung eines großen Drehmoment vorhanden ist.

Im Gegensatz zu Außenläufermotoren des Standes der Technik dreht sich der Ruckschluss nicht und stellt daher auch kein Berührschutzrisiko dar. In der Regel müssen klassische Außenläufermotoren mit drehendem Rückschluss noch zusätzlich in ein Gehäuse eingebaut werden, um einen Berührschutz sicherzustellen.

Der Rotor 3 ist zweiteilig ausgebildet. Den einen Teil des Rotors 3 bildet die zylindrische Wandung 3a, an der eine Bodenwandung 3b zur Bildung einer Glocke angeformt sein kann (Fig. 1). An der zylindrischen Wandung ist vorzugsweise ein radial nach außen stehender Kragen 3c angeformt, der an der der Bodenwandung 3a abgewandten Seite der zylindrischen Wandung 3a angeordnet ist. Hier bietet sich insbesondere an, die Glocke 3 als Tiefziehteil kostengünstig herzustellen.

Den anderen Teil des Rotors bildet das Mitnehmerelement 4. Die Glocke 3 ist mit dem Mitnehmerelement 4 vorzugsweise über eine Schweißverbindung verbunden. Hier bietet sich an, die Glocke über eine Schweißverbindung an der Bodenwandung 3b der Glocke 3 mit dem Mitnehmerelement 4 zu verbinden.

Das Mitnehmerelement 4 ist vorteilhaft mittels einer Pressverbindung mit der Welle 1 verbunden. Es ist selbstverständlich ebenso möglich, dass das Mitnehmerelement formschlüssig drehfest auf der Welle aufgeschoben ist. Das Mitnehmerelement 4 ist im Querschnitt topfförmig bzw. im Teilquerschnitt U-förmig ausgeführt und weist eine erste breitflächige inner zylindrische Wandung 4a auf, wobei die Öffnung des U's in Richtung der Permanentmagnete 13 weist.

Das Mitnehmerelement 4 kann ebenfalls als Tiefziehteil oder Gussteil hergestellt werden. Diese Ausführungsform ermöglicht eine große Oberfläche für die Pressverbindung mit der Welle 1 sowie ermöglicht eine platzsparende Konstruktion.

Die zweite zylindrische Wandung 4b ist ebenfalls nach innen gerichtet und liegt mit ihrer Außenwandung an der Innenwandung der zylindrischen Wandung der Rotorglocke 3a an. Hierdurch wird eine hohe Steifigkeit des Rotors 3 und gute Rundlaufeigenschaften erzielt. Dazu trägt im wesentlichem die Gestaltung des Mitnehmerelementes 4 bei.

Die Welle ist vorzugsweise über eine biegelastischen Stab 5 mit einem Sensortarget 6 verbunden, der in der Abtriebswelle 1 eingepresst ist. Der biegeelastische Stab 5 ist im Gehäuseteil über ein weiteres Lager 7 gelagert. Diese Verlängerung bietet sich an, damit an der Endseite die Sensorauswerteelektronik 8 direkt am Gehäuse befestigt werden kann und daher direkt mit der Elektronik 10 verbunden werden kann.

Alternativ kann die Welle 1 bis zum Sensortarget weitergeführt werden und dort gelagert werden. Dies führt jedoch zu einer Erhöhung der Trägheitsmasse des Rotors sowie zu einer Reduzierung der Wärmeübertragungskapazität des Trägers 2a des Stators.

Der Stator 11 trägt die Erregerspulen 9, die vorzugsweise als Einzelspulen ausgeführt sind und über ein Stanzgitter 12 verbunden sind.

Der Rotor bestehend aus Glocke und Mitnehmerelement trägt die Permanentmagnete 13 an der Innenseite der zylindrischen Wandung 3a der dünnwandigen Glocke. Die Permanentmagnete 13 werden vorzugsweise als Ringmagnete ausgeführt, damit die Eigensteifigkeit des Rotors erhöht wird.

Zudem ist es vorteilhaft, die Glocke aus einen metallischen Material auszuführen, damit die erforderliche Steifigkeit erzielt werden kann. Hier bietet sich an, als Material einen nichtferromagnetischen Werkstoff zu wählen, so dass bei Erregung des Stators auf den Rotor nur sehr geringe Radialkräfte wirken. Die Radialkräfte sind dadurch gering, da auf die Glocke infolge der fehlenden magnetischen Eigenschaften keine Anzugskraft durch den Stator bei elektrischer Erregung ausgeübt wird. Die Permanentmagnete sind in ihrer Radialkraftwirkung aufgrund des doppelten Luftspaltes zwischen erregtem Stator, Rotor und Außenstator ausgeglichen. In der Summe ergeben sich daher geringe Radialkräfte, die sich vorteilhaft auf die Rundlaufeigenschaften des Rotors auswirken. Insbesondere bei der Anwendung als Lenkungsmotoren ist diese Eigenschaft von sehr hoher Bedeutung. Der Motor entscheidet sich daher signifikant von anderen Motoren, bei denen Rotor und magnetischer Rückschluss als einteilig ausgeführt sind und daher nur einen Luftspalt zwischen Erregerstator und Rotor aufweisen.

Alternativ kann die Glocke auch aus einem ferromagnetischen Werkstoff ausgeführt werden. Dies verbessert die elektrischen Eigenschaften, da sich ein Teil des Erregerflusses über die Glocke schließt und somit der effektive magnetische Widerstand. geringer ist. Hierdurch kann der Wirkungsgrad verbessert werden. Die Belastung auf die Struktur nimmt jedoch zu. Die Materialauswahl ist daher entsprechend der Anforderungen auszuwählen.

Das Lager der Abtriebswelle 1a ist über einen Sägering und über einen Wellendichtring 14 abgedichtet.

Die Fig. 1b zeigt eine alternative Ausführung des Rotors. Das Mitnehmerelement entspricht dem in Fig. 1 dargestellten Mitnehmerelement. Die die Permanentmagnete fixierende bzw. tragende zylindrische Wandung 14 ist hier als Rohr ausgeführt und liegt außen auf der zylindrischen Wandung 4b des Mitnehmerelementes auf. Dies ermöglicht eine vereinfachte Rotorgestaltung. Das Rohr ist dabei als metallischer Werkstoff, Kohlefaserverbundwerkstoff oder Gasfaserwerkstoff gestaltbar. Insbesondere die Ausführung als Kohlefaser ermöglicht eine signifikante Reduzierung der Massenträgheit, da das Rohr sehr dünnwandig ausgeführt werden kann. Die Verbindung mit dem Mitnehmer kann über eine Schweißverbindung (metallischer Werkstoff) oder mittels einer Klebeverbindung erfolgen. Da die Belastbarkeit etwas geringer ist, eignet sich diese Rotorkonstruktion insbesondere für kleine Motoren.

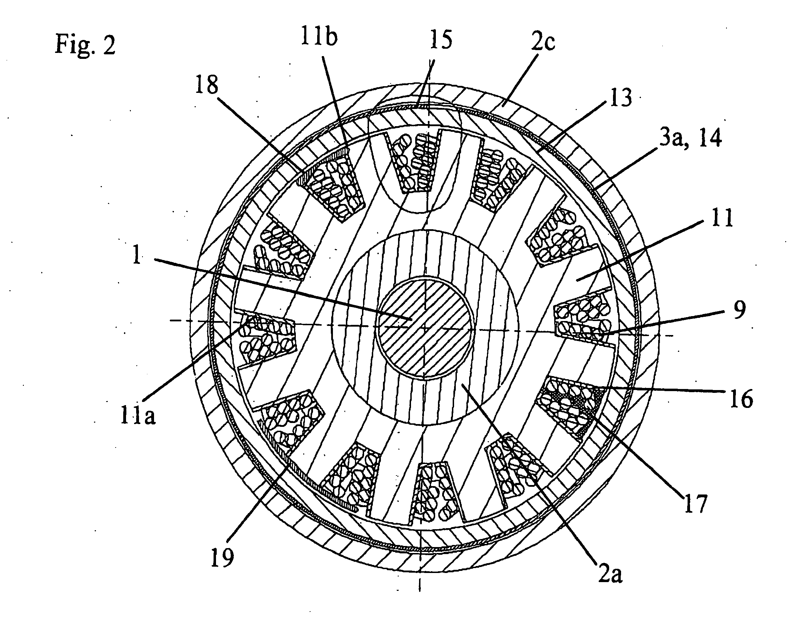

Die Fig. 2 zeigt einen Querschnitt durch den Stator. Dargestellt ist der Erregerstator 11 mit den Erregerspulen 9. Der magnetische Fluss 15 schließt sich über den Stator 11 über die Permanentmagnete 10, die zylindrische Wandung der Glocke 3a/14 und das Gehäuseteil 2c.

Die Nuten des Stators weisen gerade Flanken 11a auf und haben keine Polschuhe, wie im Elektromaschinenbau üblich. Durch den Verzicht auf Polschuhe und die Wahl von geraden Nutenflanken 11a ist es möglich Einzelspulen auf den Stator aufzusetzen, wodurch der Kupferfüllfaktor erhöht werden kann, da die Spulen in einer hohen Formgenauigkeit vorgewickelt werden können.

Im Fig. 2 sind drei Varianten der Spulenfixierung dargestellt. In einer ersten Variante wird die Nut 11 durch Folien 16 abisoliert. Danach werden die Spulen 9 aufgesetzt und zur Fixierung mit dem Stator mit einem Giesharz 17 umspritzt. Das Giesharz 17 verfüllt damit die Funktion der Fixierung und hat zudem eine Wärmübertragungsfunktion.

Gemäß Stand der Technik werden in der Regel die Nuten mit Polschuhen versehen, um das Rastmoment zu reduzieren. Die Polschuhe verhindern jedoch eine Einzelzahnwicklung und erfordern eine Nadelwickeltechnik, mit der jedoch nur geringe Kupferfüllfaktoren erreicht werden können. Durch die Gestaltung der Nut können höhere Kupferfüllfaktoren erreicht werden. Durch eine entsprechende günstige Pol-Nut-Kombination bzw. Schrägmagnetisierung der Permanentmagnete 13 kann auch mit dieser Technik ein sehr niedriges Rastmoment erzielt werden.

In einer zweiten Variante werden die Spulen auf den Stator aufgesetzt und durch entsprechende Keile 18 im Stator fixiert. Zur Anbringung der Keile ist eine kleine Aussparung 11b in der Nutflanke 11a vorgesehen, damit die Keile 18 eingeschoben werden können. Für einen Motor, der hohe Anforderung an Rastmoment und Gleichlauf erfüllt, ist es sinnvoll, die Keile 18 aus einem Material auszuführen, das magnetische Eigenschaften hat, d.h. die Keile 18 sind entweder aus einem magnetischem Kunststoff bzw. aus einem ferromagnetischen Stahl ausgeführt. Die Keile 18 führen dazu, dass der Stator in der Außenkontur komplett geschlossen ist, was dazu führt, dass die Magnete weniger stark an die Pole angezogen werden. Dies ermöglicht eine deutliche Reduzierung des Rastmomentes. Dies ist abzuwägen mit etwas schlechteren magnetischen Eigenschaften, da sich ein Teil des Flusses über die Keile schließt und somit nicht zur Momentenerzeugung beiträgt. Auch der Anbringung von Keilen ist es denkbar, dass die Spulen mit dem Stator umspritzt werden, um eine bessere Fixierung und Wärmeübergang zu erreichen.

Diese Technik ist auch bei klassischen Außenläufermotoren mit einfachem Luftspalt einsetzbar.

Als Alternative zu den Keilen 18 ist es auch denkbar, dass ein dünnwandiges ferromagnetisches Rohr 19 auf den Stator aufgeschoben, bzw. aufgeschrumpft wird. Dieses Rohr 19 ist als Ausschnitt in Fig. 2 links unten dargestellt.

## Patentansprüche

1. Elektrische Drehfeldmaschine, mit einem Innenstator (11) und einem an einer Welle (1) befestigten Rotor (3), wobei mehrere Permanentmagnete (13) an der Innenseite einer zylindrischen Wandung (3a) des Rotors (3) anliegend angeordnet sind, und die Permanentmagnete (13) zusammen mit mindestens einer elektrischen Erregerspule (9) des Innenstators einen Erregerfluss erzeugen, der durch die zylindrische Wandung (3a) des Rotors (3) durchtritt, wobei der Rotor (3) ein Mitnehmerelement (4) aufweist, welches die. Welle (1) mit der zylindrischen Wandung (3a) drehfest miteinander verbindet, wobei die zylindrische Wandung (3a) das Mitnehmerelement (4) umfasst und an dem Mitnehmerelement (4) zumindest teilweise anliegt und an diesem befestigt ist, und dass das Mitnehmerelement (4) ein topfförmiges Teil mit einer Bodenwandung (4c) und einer zylindrischen Außenwandung (4b) ist, wobei die Bodenwan-dung (4c) eine axiale Öffnung zum Durchgriff der Welle (1) aufweist und ein die Öffnung umrandender Kragen (4a) an der Bodenwandung (4c) angeordnet, insbesondere angeformt ist, welcher in das Innere des topfförmigen Teils (4) ragt und zur Befestigung an der Welle (1) dient, **dadurch gekennzeichnet, dass** die die Permanentmagnete (13) tragende zylindrische Wandung (3a) dünnwandig ausgestältet ist, wobei deren Wandstärke ein vielfaches kleiner ist als die Wandstärke des topf formieren Mitnehmerelementes.

2. Elektrische Drehfeldmaschine nach Anspruch 1, **dadurch gekennzeichnet, dass** die zylindrische Wandung (3a) des Rotors (3) mit ihrer Innenseite, an der auch die Permanentmagnete (13) anliegen, an der Außenseite der zylindrische Außenwandung (4b) des Mitnehmerelements (4) anliegt und/oder befestigt ist.

3. Elektrische Drehfeldmaschine nach Anspruch 1, **da durch gekennzeichnet**, dass an der die Permanentmagnete (13) tragenden zylindrischen Wandung (3a) des Rotors (3) ein radial nach innen weisender Kragen (3b) angeformt.oder befestigt ist, welcher an der äußeren Seite der Bodenwandung (4c) des Mitnehmerelementes (4), insbesondere mittels Schweißen, befestigt ist.

4. Elektrische Drehfeldmaschine nach einem der vorhergehenden Ansprüche, **dadurch gekennzeichnet, dass** die die Permanentmagnete (13) tragende zylindrische Wandung (3a) aus nichtferromagnetischem Stahl ist.

5. Elektrische Drehfeldmaschine nach einem der vorherigehenden Ansprüche, **dadurch gekennzeichnet, dass** das Gehäuse der Drehfeldmaschine zwei stirnseitige Gehäuseteile (2a, 2b) und ein dazwischen angeordnetes mittleres Gehäuseteil (2c) aufweist, wobei das eine stirnseitige Gehäuseteil (2a) den Innenstator (11) trägt und das mittlere Gehäuseteil (2c) den Außenstator trägt bzw. den magnetischen Rückschluss bildet.

6. Elektrische Drehfeldmaschine nach Anspruch 5, **dadurch gekennzeichnet, dass** der magnetische Rückschluss über das als Stahlrohr ausgebildete mittlere Gehäuseteil (2c) erfolgt.

7. Elektrische Drehfeldmaschine nach Anspruch 5, **dadurch gekennzeichnet, dass** in dem mittleren Gehäuseteil (2c) ein Elektroblechpaket (2d) angeordnet ist, insbesondere einliegt.

8. Elektrische Drehfeldmaschine nach einem der Ansprüche 5 bis 7, **dadurch gekennzeichnet, dass** das den Innenstator (11) tragende stirnseitige Gehäuseteil (2a) ein sich in die Rotorglocke erstreckenden Eingriffsbereich (2d) aufweist, der sich an eine stirnseitige Platte (2p) anschließt.

9. Elektrische Drehfeldmaschine nach einem der Ansprüche 5 bis 7, **dadurch gekennzeichnetnet**, dass die Welle (1) mittels Drehlagern (1a, 1b) in beiden stirnseitigen Gehäuseteilen (2a, 2b) drehbar gelagert ist.

10. Elektrische Drehfeldmaschine nach Anspruch 8 oder 9, **dadurch gekennzeichnet, dass** die Welle (1) in einer stirnseitigen, Ausnehmung (2e), insbesondere Bohrung, des Eingriffsbereichs (2d) mittels eines Lagers (1b) mit ihrem einen Wellenende (1e) gelagert ist..

11. Elektrische Drehfeldmaschine nach einem der Ansprüche 8 bis 10, **dadurch gekennzeichnet , dass** das eine Wellenende (1e) der Welle (1) innehalb des Rotors (3) in dem Eingriffsbereich (2d) in einer Stirnseitigen Ausnehmung (2e), insbesondere Sacklochbohrung oder Durchgangsbohrung mittels eines Lagers (1b) gelagert ist, wobei das Lager (1b) und das Wellenende (1e) im Bereieh der Permanentmagnete (13) des Rotors (3) angeordnet ist.

12. Elektrische Drehfeldmaschine nach Anspruch 11, **dadurch gekennzeichnet, dass** der in den Rotor hineinragende Wellenabschnitt (1e) kürzer ist als die axiale Erstreckung des Rotors (3), insbesondere nur halb solang wie die Rotorlänge oder kürzer als die halbe Rotorlänge ist.

13. Elektrische Drehfeldmaschine nach einem der vorhergehenden Ansprüche, **dadurch gekennzeichnet , dass** an dem Wellenende (1e) des in den Rotor hineinreichenden Wellenbereichs ein Target (6) befestigt oder integriert ist, dessen Bewegung von einer Sensoreinrichtung (8) ermittelt wird.

14. Elektrische Drehfeldmaschine nach Anspruch 13, **dadurch gekennzeichnet, dass** an dem Wellenende des in den Rotor hineinreichenden Wellenbereichs ein insbesondere biegeelastischer Stab (5) angeordnet ist, der das Target (6) trägt, wobei der Stab (5) mittels eines zusätzlichen Lagers in dem einen stirnseitigen Gehäuseteil gelagert sein kann.

15. Elektrische Drehfeldmaschine nach einem der vorhergehenden Ansprüche, **dadurch gekennzeichnet, dass** Nuten des Stators (11) gerade Flanken (11a) aufweisen.

16. Elektrische Drehfeldmaschine nach einem der vorhergehenden Ansprüche, **dadurch gekennzeichnet, dass** die Erregerwicklungen (9) in den Nuten (11) mit Gießharz (17) eingegossen oder mittels in den Nutenflanken (11a) verankerten Keilen (18) verschlossen sind.

17. Elektrische Drehfeldmaschine nach einem der Ansprüche 1 bis 15, **dadurch gekennzeichnet, dass** die Nuten des Stators (11) mittels eines dünnwandigen Rohres (19) verschlossen sind, wobei das Rohr (19) insbesondere aus ferromagnetischem Material ist.

18. Elektrische Drehfeldmaschine nach Anspruch 17, **dadurch gekennzeichnet, dass** das Rohr (19) auf den Stator aufgeschoben und/oder aufgeschrumpft ist.

19. Elektrische Drehfeldmaschine nach einem der vorhergehenden Ansprüche **dadurch gekennzeichnet, dass** die Permanentmagnete (13) als Ringmagnete ausgebildet sind.

20. Elektrische Drehfeldmaschine nach einem der vorhergehenden Ansprüche, **dadurch gekennzeichnet, dass** die zylindrische Wandung (3a) des Rotors (3) aus einem metallischen Werkstoff, Kohlefaserverbundwerkstoff oder Gasfaserwerkstoff ist.

## Claims

1. Electric induction machine, having an inner stator (11) and a rotor (3) fixed to a shaft (1), a plurality of permanent magnets (13) being arranged so as to bear against the inside of a cylindrical wall (3a) of the rotor (3), and the permanent magnets (13) together with at least one electric excitation coil (9) of the inner stator generating an excitation flux, which passes through the cylindrical wall (3a) of the rotor (3), the rotor (3) comprising a driving element (4), which non-rotatably connects the shaft (1) to the cylindrical wall (3a), the cylindrical wall (3a) comprising the driving element (4) and at least in parts bearing against the driving element (4) and being fixed thereto, and in that the driving element (4) is a cupped-shaped part with a base wall (4c) and a cylindrical outer wall (4b), the base wall (4c) comprising an axial opening to engage the shaft (1) and a collar (4a) bordering the opening being arranged, in particular being formed on the base wall (4c), which projects into the interior of the cup-shaped part (4) and serves for fixing to the shaft (1), **characterised in that** the cylindrical wall (3a) carrying the permanent magnets (13) is configured in a thin-walled manner, the wall thickness of which being many times smaller than the wall thickness of the cup-shaped driving element.

2. Electric induction machine according to Claim 1, **characterised in that** the cylindrical wall (3a) of the rotor (3) with its inside, against which the permanent magnets (13) also bear, bears against and/or is fixed to the outside of the cylindrical outer wall (4b) of the driving element (4).

3. Electric induction machine according to Claim 1, **characterised in that** a radially inward pointing collar (3b) is formed on or fixed to the cylindrical wall (3a) of the rotor (3) carrying the permanent magnets (13), which collar is fixed to the outer side of the base wall (4c) of the driving element (4), in particular by means of welding.

4. Electric induction machine according to any one of the preceding claims, **characterised in that** the cylindrical wall (3a) carrying the permanent magnets (13) is made from non-ferromagnetic steel.

5. Electric induction machine according to any one of the preceding claims, **characterised in that** the housing of the induction machine comprises two frontal housing parts (2a, 2b) and one centre housing part (2c) arranged therebetween, the one frontal housing part (2a) carrying the inner stator (11) and the centre housing part (2c) carrying the outer stator and/or forming the magnetic return.

6. Electric induction machine according to Claim 5, **characterised in that** the magnetic return takes place via the centre housing part (2c) designed as a steel pipe.

7. Electric induction machine according to Claim 5, **characterised in that** an electric lamination stack (2d) is arranged, in particular lies, in the centre housing part (2c).

8. Electric induction machine according to any one of Claims 5 to 7, **characterised in that** the frontal housing part (2a) carrying the inner stator (11) comprises an engagement region (2d) extending into the rotor bell, which engagement region is attached to a frontal plate (2p).

9. Electric induction machine according to any one of Claims 5 to 7, **characterised in that** the shaft (1) is rotatably mounted in both frontal housing parts (2a, 2b) by means of rotary bearings (1a, 1b).

10. Electric induction machine according to Claim 8 or 9, **characterised in that** the shaft (1) is mounted in a frontal recess (2e), in particular a borehole, of the engagement region (2d) by means of a bearing (1b) with its one shaft end (1e).

11. Electric induction machine according to any one of Claims 8 to 10, **characterised in that** the one shaft end (1e) of the shaft (1) is mounted inside the rotor (3) in the engagement region (2d) in a frontal recess (2e), in particular a blind borehole or a through-borehole by means of a bearing (1b), the bearing (1b) and the shaft end (1e) being arranged in the region of the permanent magnets (13) of the rotor (3).

12. Electric induction machine according to Claim 11, **characterised in that** the shaft section (1e) projecting into the rotor is shorter than the axial extension of the rotor (3), in particular only half as long as the rotor length or shorter than the half rotor length.

13. Electric induction machine according to any one of the preceding claims, **characterised in that** a target (6) is fixed or integrated to the shaft end (1e) of the shaft region extending into the rotor, the movement of which target is determined by a sensor device (8).

14. Electric induction machine according to Claim 13, **characterised in that** a particularly resiliently flexible rod (5) is arranged on the shaft end of the shaft region extending into the rotor, which rod carries the target (6), it being possible to mount the rod (5) by means of an additional bearing in the one frontal housing part.

15. Electric induction machine according to any one of the preceding claims, **characterised in that** grooves of the stator (11) comprise straight edges (11a).

16. Electric induction machine according to any one of the preceding claims, **characterised in that** the excitation windings (9) are moulded into the grooves (11) with cast resin (17) or sealed by means of the embedded wedges (18) in the groove edges (11a).

17. Electric induction machine according to any one of Claims 1 to 15, **characterised in that** the grooves of the stator (11) are sealed by means of a thin-walled pipe (19), the pipe (19) in particular being made from ferromagnetic material.

18. Electric induction machine according to Claim 17, **characterised in that** the pipe (19) is slid and/or shrink-fitted onto the stator.

19. Electric induction machine according to any one of the preceding claims, **characterised in that** the permanent magnets (13) are designed as annular magnets.

20. Electric induction machine according to any one of the preceding claims, **characterised in that** the cylindrical wall (3a) of the rotor (3) is made from a metallic material, carbon fibre composite material or gas fibre material.

## Revendications

1. Machine électrique à champ tournant ou à induction, comprenant un stator intérieur (11) et un rotor (3) fixé à un arbre (1), machine
dans laquelle sont agencés plusieurs aimants permanents (13) en s'appliquant contre le côté intérieur d'une paroi cylindrique (3a) du rotor (3), et les aimants permanents (13) engendrent, en commun avec au moins une bobine d'excitation électrique (9) du stator intérieur, un flux d'excitation, qui traverse la paroi cylindrique (3a) du rotor (3),
dans laquelle le rotor (3) présente un élément entraîneur (4), qui relie de manière fixe en rotation l'arbre (1) à la paroi cylindrique (3a),
dans laquelle la paroi cylindrique (3a) englobe l'élément entraîneur (4) et s'appuie au moins partiellement contre l'élément entraîneur (4) et y est fixée, et l'élément entraîneur (4) est une pièce en forme de pot avec une paroi de fond (4c) et une paroi extérieure cylindrique (4b),
dans laquelle la paroi de fond (4c) présente une ouverture axiale pour le passage de l'arbre (1), et une collerette (4a), qui entoure la périphérie de l'ouverture, est agencée, notamment formée, sur la paroi de fond (4c), cette collerette s'engageant à l'intérieur de la pièce (4) en forme de pot et servant à la fixation à l'arbre (1),
**caractérisée en ce que** la paroi cylindrique (3a) portant les aimants permanents (13) est d'une configuration à paroi mince, son épaisseur de paroi étant un multiple de fois plus faible que l'épaisseur de paroi de l'élément entraîneur en forme de pot.

2. Machine électrique à champ tournant selon la revendication 1, **caractérisée en ce que** la paroi cylindrique (3a) du rotor (3) s'appuie et/ou est fixée, avec son côté intérieur contre lequel s'appuient également les aimants permanents (13), sur le côté extérieur de la paroi extérieure cylindrique (4b) de l'élément entraîneur (4).

3. Machine électrique à champ tournant selon la revendication 1, **caractérisée en ce que** sur la paroi cylindrique (3a) du rotor (3), qui porte les aimants permanents (13), est formée ou fixée une collerette (3b) qui est fixée, notamment par soudage, sur le côté extérieur de la paroi de fond (4c) de l'élément entraîneur (4).

4. Machine électrique à champ tournant selon l'une des revendications précédentes, **caractérisée en ce que** la paroi cylindrique (3a) portant les aimants permanents (13) est en acier non ferromagnétique.

5. Machine électrique à champ tournant selon l'une des revendications précédentes, **caractérisée en ce que** le carter de la machine à champ tournant comprend deux parties de carter frontales (2a, 2b), ainsi qu'une partie de carter centrale (2c) agencée entre les deux précédentes, une partie de carter frontale (2a) portant le stator intérieur (11), et la partie de carter centrale (2c) portant le stator extérieur ou formant le retour de flux magnétique.

6. Machine électrique à champ tournant selon la revendication 5, **caractérisée en ce que** le retour de flux magnétique s'effectue par l'intermédiaire de la partie de carter centrale (2c) réalisée sous forme de tube d'acier.

7. Machine électrique à champ tournant selon la revendication 5, **caractérisée en ce que** dans la partie de carter centrale (2c) est agencé, notamment encastré, un empilement de tôles électriques (2d).

8. Machine électrique à champ tournant selon l'une des revendications 5 à 7, **caractérisée en ce que** la pièce de carter frontale (2a), qui porte le stator intérieur (11), présente une zone d'engagement (2d) s'engageant dans la cloche de rotor et se raccordant à une plaque frontale (2p).

9. Machine électrique à champ tournant selon l'une des revendications 5 à 7, **caractérisée en ce que** l'arbre (1) est monté en rotation dans les deux parties de carter frontales (2a, 2b) au moyen de paliers de rotation ou roulements (1a, 1b).

10. Machine électrique à champ tournant selon la revendication 8 ou la revendication 9, **caractérisée en ce que** l'arbre (1) est monté, avec l'une (1e) de ses extrémités d'arbre, dans un évidement frontal (2e), notamment un alésage, de la zone d'engagement (2d), au moyen d'un palier ou roulement (1b).

11. Machine électrique à champ tournant selon l'une des revendications 8 à 10, **caractérisée en ce que** ladite une extrémité d'arbre (1e) de l'arbre (1) est montée, à l'intérieur du rotor (3), dans la zone d'engagement (2d), dans un évidement frontal (2e), notamment un alésage borgne ou un alésage de passage, au moyen d'un palier ou roulement (1b), le palier ou roulement (1b) et l'extrémité d'arbre (1e) étant agencés dans la région des aimants permanents (13) du rotor (3).

12. Machine électrique à champ tournant selon la revendication 11, **caractérisée en ce que** le tronçon d'arbre (1e) s'engageant dans le rotor est plus court que l'étendue axiale du rotor (3), et est notamment d'une longueur seulement égale à la moitié de la longueur du rotor, ou est plus court que la moitié de la longueur du rotor.

13. Machine électrique à champ tournant selon l'une des revendications précédentes, **caractérisée en ce qu'**à l'extrémité d'arbre (1e) de la zone d'arbre s'engageant à l'intérieur du rotor, est fixée ou intégrée une cible (6) dont le mouvement est relevé par un dispositif de capteur (8).

14. Machine électrique à champ tournant selon la revendication 13, **caractérisée en ce qu'**à l'extrémité d'arbre de la zone d'arbre s'engageant à l'intérieur du rotor, est agencée une tige (5), notamment élastique en flexion, qui porte la cible (6), la tige (5) pouvant être montée dans la partie de carter frontale correspondante, par un palier ou roulement supplémentaire.

15. Machine électrique à champ tournant selon l'une des revendications précédentes, **caractérisée en ce que** des rainures du stator (11) présentent des flancs droits (11a).

16. Machine électrique à champ tournant selon l'une des revendications précédentes, **caractérisée en ce que** les enroulements d'excitation (9) sont noyés dans les rainures (11) avec de la résine de moulage (17), ou sont enfermés au moyen de coins (18) ancrés dans les flancs de rainure (11a).

17. Machine électrique à champ tournant selon l'une des revendications 1 à 15, **caractérisée en ce que** les rainures du stator (11) sont fermées au moyen d'un tube (19) à paroi mince, le tube (19) étant notamment en un matériau ferromagnétique.

18. Machine électrique à champ tournant selon la revendication 17, **caractérisée en ce que** le tube (19) est glissé et/ou fretté sur le stator.

19. Machine électrique à champ tournant selon l'une des revendications précédentes, **caractérisée en ce que** les aimants permanents (13) sont réalisés en tant qu'aimants annulaires.

20. Machine électrique à champ tournant selon l'une des revendications précédentes, **caractérisée en ce que** la paroi cylindrique (3a) du rotor (3) est réalisée en un matériau métallique, un matériau composite à fibres de carbone, ou un matériau à fibres de verre.
